Europäisches Patentamt

European Patent Office

Office européen des brevets

(19)

(11) Veröffentlichungsnummer: **0 267 547 B1**

# EUROPÄISCHE PATENTSCHRIFT

(12)

(45) Veröffentlichungstag der Patentschrift: **15.05.91**

(51) Int. Cl.5: **G11B 33/04**, G11B 17/22

(21) Anmeldenummer: **87116384.6**

(22) Anmeldetag: **06.11.87**

(54) **Magazin für plattenförmige Aufzeichnungsgträger.**

(30) Priorität: **14.11.86 DE 3638912**

(43) Veröffentlichungstag der Anmeldung:
**18.05.88 Patentblatt 88/20**

(45) Bekanntmachung des Hinweises auf die
Patenterteilung:
**15.05.91 Patentblatt 91/20**

(84) Benannte Vertragsstaaten:
**AT BE CH DE ES FR GB IT LI LU NL SE**

(56) Entgegenhaltungen:
**EP-A- 0 141 113**
**BE-A- 898 775**
**FR-A- 2 004 274**
**GB-A- 2 160 349**
**US-A- 4 539 663**

**PATENT ABSTRACTS OF JAPAN, Band 8, Nr.
269 (P-319)[1706], 8. Dezember 1984; & JP-
A-59 135 661 (MATSUSHITA DENKI SANGYO
K.K.) 03-08-1984**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Caspers, Johannes
An der Kapelle 1
W-7730 Villingen-Schwenningen(DE)**
Erfinder: **Scheffler, Wilfried
Auf Schelmen 23
W-7710 Donaueschingen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Magazin mit mehreren Fächern zur Aufnahme von plattenförmigen Aufzeichnungsträgern, bei dem an einer Seite eines jeden Fachs eine Aussparung für eine Blattfeder vorgesehen ist, deren hinteres Ende in der Aussparung befestigt ist, und bei der die Blattfeder so gebogen ist, daß sie teilweise in den für die Aufnahme des plattenförmigen Aufzeichnungsträgers vorgesehenen Raum ragt.

Ein derartiges Magazin ist z.B. für CD-Spieler zur Aufnahme mehrerer CD-Platten geeignet. Bei CD-Spielern mit Magazin, die für den Einbau in Fahrzeugen gedacht sind, ist wegen der teilweise starken Erschütterungen eine Haltevorrichtung für die CD-Platten vorzusehen, damit sie nicht aus dem Magazin während der Fahrt herausfallen können.

Aus der GB-A 2 160 349 ist ein Magazin dieser Bauart bekannt. In jedem Fach des Magazins ist an einer Seite eine Aussparung vorgesehen, durch den das V-förmig gebogene vordere Ende einer Blattfeder in den Innenraum des Fachs ragt, deren hinteres Ende fest mit dem Fach verbunden ist.

Beim Einschieben einer Platte drückt der Plattenrand das V-förmige vordere Ende der Blattfeder durch die Aussparung zurück nach außen. Wenn die Platte vollständig im Fach liegt, ragt das V-förmige vordere Ende der Blattfeder wieder durch die Aussparung in den Innenraum des Fachs und drückt dabei gleichzeitig auf den Rand der Platte, damit sie gegen einen halbkreisförmigen Anschlag im Fach gedrückt wird. Auf diese Weise wird die Platte gegen Verrutschen und Herausfallen gesichert.

Ein Nachteil dieses bekannten Magazins liegt aber darin, daß der Bediener ohne eine zusätzliche Anzeigevorrichtung nicht erkennen kann, ob in einem Fach eine Platte liegt oder ob das Fach leer ist.

Es ist deshalb Aufgabe der Erfindung, ein Magazin der eingangs beschriebenen Art so zu gestalten, daß der Bediener ohne eine platzraubende zusätzliche Anzeigevorrichtung auf den ersten Blick erkennen kann, welche Fächer des Magazins leer sind und in welchen Fächern eine Platte liegt.

Die Erfindung löst diese Aufgabe dadurch, daß für jedes Fach an der Frontseite des Magazins ein Fenster vorgesehen ist, daß die Blattfedern an ihren vorderen Ende abgebogen sind, daß die vorderen Enden der Blattfedern bei eingelegtem plattenförmigen Aufzeichnungsträger das Fenster abdecken, während es bei nicht eingelegtem plattenförmigen Aufzeichnungsträger frei bleibt.

Es zeigen

Figur 1    ein Fach des erfindungsgemäßen Magazins in Draufsicht ohne CD-Platte

Figur 2    ein Fach des erfindungsgemäßen Magazins in Draufsicht mit eingelegter CD-Platte

Figur 3    ein erfindungsgemaßes Magazin mit zehn Fächern und vier eingelegten CD-Platten.

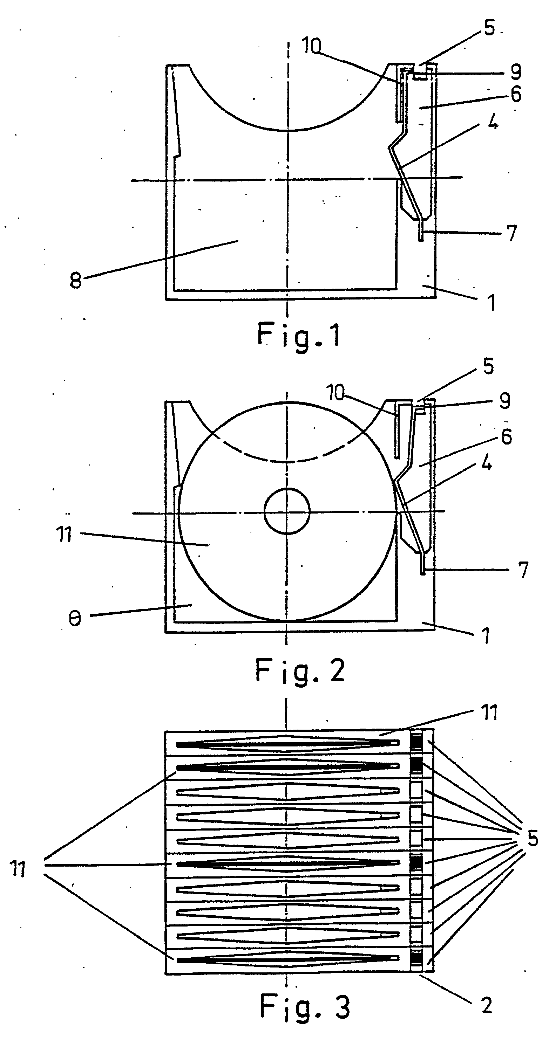

In Figur 1 ist ein Fach 1 des Magazins in Draufsicht ohne eingelegte CD-Platte dargestellt. An einer Seite des Fachs 1 ist eine Aussparung 6 für eine Blattfeder 4 vorgesehen, Die Blattfeder 4, deren hinteres Ende 7 in der Aussparung 6 befestigt ist, ist so gebogen, daß sie teilweise in den Raum 8 ragt, der zur Aufnahme der CD-Platte vorgesehen ist. Das vordere Ende 9 der Blattfeder 4 liegt an einem Anschlag 10.

In Figur 2 ist eine CD-Platte 11 in das Fach 1 eingelegt. Durch die CD-Platte 11 wird die Blattfeder 4 nach außen entgegen der Federkraft gedrückt. Infolge der auf die CD-Platte 11 drückenden Federkraft ist die CD-Platte 11 im Fach 1 nicht nur bei Erschütterungen vor Herausfallen gesichert, sondern auch elastisch gelagert, so daß keinerlei Störgeräusche durch CD-Platten zu hören sind, die im Magazin klappern.

Das vordere Ende 9 der Blattfeder 4 ist erfindungsgemäß abgebogen, z.B. rechtwinklig, so daß es parallel zur Frontseite des Magazins 2 verläuft. In der Frontseite ist für jedes Fach ein Fenster 5 vorgesehen. Das Fenster 5 ist in der Frontseite so angeordnet, daß es bei nicht eingelegter CD-Platte 11 frei bleibt, während es bei eingelegter CD-Platte 11 durch das vordere abgebogene Ende 9 der Blattfeder 4 verdeckt wird. Durch diese Maßnahme sieht ein Beobachter sofort, ob eine CD-Platte im dazugehörigen Fach liegt oder ob dieses Fach leer ist.

Besonders vorteilhaft ist es, daß die Fenster 5 mechanisch oder optisch abtastbar sind. Der CD-Spieler kann deshalb durch Abtasten der Fenster 5 mittels einer Abtastvorrichtung feststellen, welche Fächer des Magazins mit CD-Platten belegt sind und welche leer sind.

In Figur 3 ist die Frontseite eines Magazins 2 mit zehn Fächern gezeigt, bei dem im ersten, im zweiten, im sechsten und im zehnten Fach eine CD-Platte 11 liegt, während die restlichen Fächer leer sind. An den Fenstern 5 ist sofort sowohl für einen Beobachter optisch als auch für eine mechanisch oder optische Abtastvorrichtung erkennbar, ob eine CD-Platte im dazugehörigen Fach liegt oder nicht.

Das Magazin ist nicht auf CD-Platten beschränkt. Es ist für sämtliche plattenförmige Aufzeichnungsträger wie z.B. Videoplatten oder Floppy-Discs geeignet.

## Ansprüche

1. Magazin (2) mit mehreren Fächern (1) zur Aufnahme von plattenförmigen Aufzeichnungsträgern (11), bei dem an einer Seite eines jeden Fachs (1) eine Aussparung (6) für eine Blattfeder (4) vorgesehen ist, deren hinteres Ende (7) in der Aussparung (6) befestigt ist, und bei der die Blattfeder (4) so gebogen ist, daß sie teilweise in den für die Aufnahme des plattenförmigen Aufzeichnungsträgers (11) vorgesehenen Raum ragt, **dadurch gekennzeichnet,** daß für jedes Fach (1) an der Frontseite des Magazins (2) ein Fenster (5) vorgesehen ist, daß die Blattfedern (4) an ihren vorderen Enden (9) abgebogen sind und daß die vorderen Enden (9) der Blattfedern (4) bei eingelegtem plattenförmigen Aufzeichnungsträger (11) das Fenster (5) abdecken, während es bei nicht eingelegtem plattenförmigen Aufzeichnungsträger (11) frei bleibt.

2. Magazin nach Anspruch 1, **dadurch gekennzeichnet,** daß die Fenster (5) optisch oder mechanisch abtastbar sind.

## Claims

1. Magazine (2) with several drawers (1) for accommodating disc-shaped record carriers (11), in which there is provided on one side of each drawer (1) a recess (6) for a leaf spring (4), the rear end (7) of which is fixed in the recess (6), and in which the leaf spring (4) is bent so that it projects partly into the space provided for accommodating the disc-shaped record carrier (11), characterized in that for each drawer (1) a window (5) is provided at the front side of the magazine (2), that the leaf springs (4) are bent at their front ends (9) and that the front ends (9) of the leaf springs (4) cover the window (5) when the disc-shaped record carrier (11) is inserted, whereas it remains unblocked when the disc-shaped record carrier (11) is not inserted.

2. Magazine according to claim 1, characterized in that the windows (5) can be scanned optically or mechanically.

## Revendications

1. Magasin (2) avec plusieurs cases (1) destinées à recevoir des supports d'enregistrement (11) en forme de plaque, du type sur lequel une encoche (6) pour un ressort à lame (4) dont l'extrémité arrière (7) est fixée dans l'encoche (6), est ménagée sur un côté de chaque case (1), le ressort à lame (4) étant recourbé de manière qu'il pénètre partiellement en saillie dans l'espace prévu pour recevoir le support d'enregistrement (11) en forme de plaque, caractérisé en ce qu'une fenêtre (5) est prévue pour chaque case (1) sur la partie frontale du magasin (2), que les ressorts à lame (4) sont recourbés à leurs extrémités antérieures (9), et que les extrémités avant (9) des ressorts à lame (4) recouvrent la fenêtre (5) lorsqu'un support d'enregistrement (11) en forme de plaque est en place, tandis qu'elle reste libre en l'absence de support d'enregistrement (11) en forme de plaque.

2. Magasin selon la revendication 1, caractérisé en ce qu'il est possible de détecter les fenêtres (5) par des moyens optiques ou mécaniques.

Fig.1

Fig. 2

Fig. 3